(19) **Europäisches Patentamt European Patent Office Office européen des brevets**

(11) **EP 4 629 534 A1**

(12) **EUROPEAN PATENT APPLICATION**
published in accordance with Art. 153(4) EPC

(43) Date of publication:
**08.10.2025 Bulletin 2025/41**

(21) Application number: **24738428.2**

(22) Date of filing: **02.01.2024**

(51) International Patent Classification (IPC):
***H04J 3/06*** (2006.01)

(52) Cooperative Patent Classification (CPC):
**H04J 3/06**

(86) International application number:
**PCT/CN2024/070030**

(87) International publication number:
**WO 2024/146495 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.01.2023 CN 202310006466**

(71) Applicant: **ZTE CORPORATION
Shenzhen, Guangdong 518057 (CN)**

(72) Inventor: **CAO, Haiping
Shenzhen, Guangdong 518057 (CN)**

(74) Representative: **Canzler & Bergmeier
Patentanwälte
Partnerschaft mbB
Despag-Straße 6
85055 Ingolstadt (DE)**

(54) **CLOCK SYNCHRONIZATION METHOD, DEVICE, AND MEDIUM**

(57) The present disclosure provides a clock synchronization method, comprising: sending a first synchronization state message to a downstream network element by means of a first physical link aggregation port; and sending a second synchronization state message to a next-level network element by means of a cascade port. The present disclosure further provides an electronic device and a computer readable medium.

send a first SSM to a downstream network
element via a first PLA port
— S110

↓

send a second SSM to a next-level network
element via a cascade port
— S120

FIG. 3

## Description

CROSS REFERENCE TO RELATED APPLICATIONS

The present disclosure claims the priority to Chinese Patent Application No. 202310006466.1 filed with the CNIPA on January 4, 2023, the contents of which are incorporated herein by reference in their entirety.

TECHNICAL FIELD

The present disclosure relates to, but is not limited to, the technical field of communications.

BACKGROUND

In microwave air interface applications, in order to expand the data bandwidth in one direction, a plurality of air interfaces are generally aggregated at a physical layer, so that an air interface capacity in the one direction is expanded from a capacity of one air interface to the sum of capacities of the plurality of air interfaces.

The cross-network element air interface aggregation technology develops in order to further expand the capacity. In a cross-network element scenario, one-hop network elements participating in aggregation involve at least four network elements, so that the capacity can be effectively expanded.

However, when the cross-network element air interface aggregation technology is adopted to transmit messages, the following problems may occur: 1) when a main link has a problem or is disconnected, a clock cannot be accurately assigned to a downstream network element through a network element on the main link; 2) Quality Level (QL) information cannot be transmitted; and 3) a clock tracking link has uncertainty.

SUMMARY

The embodiments of the present disclosure provide a clock synchronization method, an electronic device, and a computer readable medium.

**In** a first aspect of the present disclosure, there is provided a clock synchronization method, including:

sending a first synchronization status message to a downstream network element via a first physical link aggregation port; and
sending a second synchronization status message to a next-level network element via a cascade port; wherein,
a node number carried by the first synchronization status message satisfies the following relational expression (1), a node number carried by the second synchronization status message satisfies the following formula (2), grandmaster IDs carried by the first synchronization status message and the second synchronization status message are an identification of a current network element, the current network element and N network elements are subjected to cross-box aggregation, the N+1 network elements subjected to cross-box aggregation are cascaded in sequence, the current network element is a first-level network element, and N is a positive integer:

$$N11 \geq N0 + 4 \qquad (1)$$

$$N12 = N0 + 1 \qquad (2)$$

wherein N11 denotes the node number carried by the first synchronization status message;
N12 denotes the node number carried by the second synchronization status message; and
N0 denotes an initial node number.

In a second aspect of the present disclosure, there is provided a clock synchronization method, including:

receiving a third synchronization status message sent by a previous-level network element via a first cascade port of a current network element;
generating a fourth synchronization status message based on the third synchronization status message, wherein a clock number carried by the fourth synchronization status message is greater than a clock number carried by the third synchronization status message by 1; and
sending the fourth synchronization status message in a form of a private message via an air interface of the current network element, wherein the current network element and N network elements are subjected to cross-box aggregation, the N+1 network elements subjected to cross-box aggregation are cascaded in sequence, the current network element is an M-level network element, M is a positive integer not less than 2.

In a third aspect of the present disclosure, there is provided a clock synchronization method, including:

receiving a first synchronization status message sent by an upstream network element via a second physical link aggregation port;
receiving a fifth synchronization status message via a first cascade port;
analyzing the first synchronization status message to obtain a node number carried by the first synchronization status message;
analyzing the fifth synchronization status message to obtain a node number carried by the fifth synchronization status message; and
determining a clock source corresponding to a grandmaster ID carried by one of the first synchronization status message and the fifth synchronization status message which carries the smaller node number as a clock source of a current network element, wherein,
the current network element and N network elements are subjected to cross-box aggregation, the N+1 network elements subjected to cross-box aggregation are cascaded in sequence, the current network element is a first-level network element, and N is a positive integer.

In a fourth aspect of the present disclosure, there is provided a clock synchronization method, including:

receiving an eighth synchronization status message in a form of a private message via an air interface;
generating a ninth synchronization status message based on the eighth synchronization status message, wherein a node number carried by the ninth synchronization status message is equal to a node number carried by the eighth synchronization status message plus 1; and
sending the ninth synchronization status message to a previous-level network element via a first cascade port, wherein,
a current network element and N network elements are subjected to cross-box aggregation, the N+1 network elements subjected to cross-box aggregation are cascaded in sequence, and the current network element is not a first-level network element.

In a fifth aspect of the present disclosure, there is provided an electronic device, including:

one or more processors; and
a storage device having stored thereon one or more programs which, when executed by the one or more processors, cause the one or more processors to implement any of the above clock synchronization methods provided in the present disclosure.

In a sixth aspect of the present disclosure, there is provided a computer readable medium having stored thereon a computer program which, when executed by a processor, implements any of the above clock synchronization methods provided in the present disclosure.

BRIEF DESCRIPTION OF DRAWINGS

FIG. 1 is a schematic diagram illustrating transmission of a Precision Time Protocol (PTP) message in a cross-box one-hop network in case of cross-box PLA aggregation of a plurality of network elements;
FIG. 2 is a schematic diagram illustrating information transmission between a plurality of upstream network elements subjected to cross-box PLA aggregation and a plurality of downstream network elements subjected to cross-box PLA aggregation;
FIG. 3 is a flowchart illustrating an implementation of a clock synchronization method provided in a first aspect of the present disclosure;
FIG. 4 is a schematic structural diagram of a Synchronization Status Message (SSM);
FIG. 5 is a flowchart illustrating an implementation of a clock synchronization method provided in a second aspect of the present disclosure;
FIG. 6 is a flowchart illustrating another implementation of a clock synchronization method provided in the second aspect of the present disclosure;

FIG. 7 is a flowchart illustrating an implementation of a clock synchronization method provided in a third aspect of the present disclosure;

FIG. 8 is a flowchart illustrating another implementation of a clock synchronization method provided in the third aspect of the present disclosure;

FIG. 9 is a schematic diagram illustrating information transmission among a plurality of upstream network elements subjected to cross-box PLA aggregation, a plurality of midstream network elements subjected to cross-box PLA aggregation, and a plurality of downstream network elements subjected to cross-box PLA aggregation;

FIG. 10 is a flowchart illustrating an implementation of a clock synchronization method provided in a fourth aspect of the present disclosure;

FIG. 11 is a flowchart illustrating another implementation of a clock synchronization method provided in the fourth aspect of the present disclosure;

FIG. 12 is a block diagram of an electronic device according to an implementation of the present disclosure; and

FIG. 13 is a schematic diagram of a computer readable medium according to the present disclosure.

## DETAIL DESCRIPTION OF EMBODIMENTS

In order to enable those of ordinary skill in the art to better understand the technical solutions of the present disclosure, a clock synchronization method, an electronic device, and a computer readable medium provided in the present disclosure are described in detail below with reference to the drawings.

Exemplary embodiments will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein can be combined with one another if no conflict is incurred.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term "include" and/or the term "be made of" used herein indicates the presence of the described features, integers, operations, elements and/or components, but do not exclude the presence or addition of one or more other features, integers, operations, elements, components and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

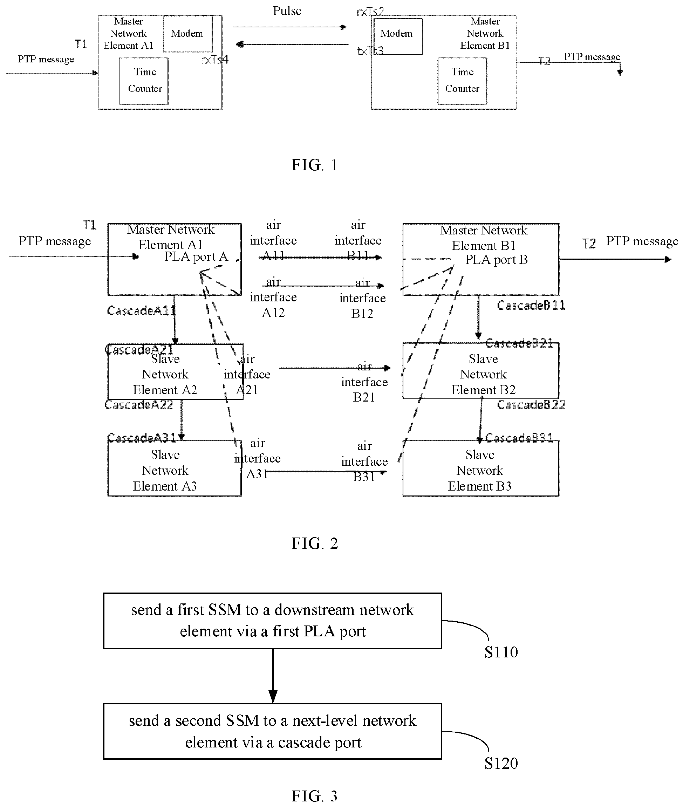

When a plurality of network elements perform cross-box PLA aggregation, instead of separate air interfaces, merely one PLA port can be seen as an interface in an air interface direction for protocol messages such as a PTP message or a generalized Precision Time Protocol (gPTP) message. As shown in FIG. 1, in a cross-box one-hop network, the PTP message or the gPTP message enters the network from a master network element A1, and is provided with a timestamp by a time counter T1 at an ingress port of the master network element A1, and then the message is sliced and sent out via a PLA port; the message arrives at a master network element B1 through an air interface link, and is provided with a timestamp by a time counter T2 at an egress port of the master network element B1; and T2-T1 is calculated and taken as a residence time in the network, and is added to a Correction Field (CF) of the message by correction. In order to avoid a miscalculation of the residence time, a time frequency of the master network element A1 is desired to be synchronized with that of the master network element B1, and the miscalculation of the residence time may be caused by de-synchronization of the time frequency of the master network element A1 and the time frequency of the master network element B1.

In the implementation illustrated by FIG. 1, each of the master network element A1 and the master network element B1 includes a modulator-demodulator (modem), the master network element A1 may send an rxTs2 signal to the master network element B1 and the master network element B1 may send a txTs3 signal to the master network element A1, which will not be described in detail.

In an existing technology, the master network element A1 and the master network element B1 achieve time synchronization through private messages between single-air interfaces. The private messages are merely transmitted between the air interfaces, and FIG. 2 illustrates a synchronization mechanism. The master network element A1 includes an air interface A11 and an air interface A12, and the master network element B1 includes an air interface B11 and an air interface B12, so that there are two air interface links between the master network element A1 and the master network element B1. If both of the two air interface links are disconnected, the time synchronization mechanism of the master network element A1 and the network main element B1 may fail.

In view of the above, in one aspect of the present disclosure, there is provided a clock synchronization method, and as shown in FIG. 3, the clock synchronization method includes:

operation S110, sending a first SSM to a downstream network element via a first PLA port; and
operation S120, sending a second SSM to a next-level network element via a cascade port.

A node number (NodeNum) carried by the first SSM satisfies the following relational expression (1):

$$N11 \geq N0 + 4 \qquad (1)$$

wherein N11 denotes the node number carried by the first SSM; and
N0 denotes an initial node number.

NodeNum carried by the second SSM satisfies the following formula (2):

$$N12 = N0 + 1 \qquad (2)$$

where N12 denotes the node number carried by the second SSM.

Grandmaster IDs (GMIDs) carried by the first SSM and the second SSM are an identification of a current network element, the current network element and N network elements are subjected to cross-box aggregation, the N+1 network elements subjected to cross-box aggregation are cascaded in sequence, the current network element is a first-level network element, and N is a positive integer. It should be noted that the first SSM sent by the current network element to the downstream network element via first PLA port may be in the form of an Ethernet frame, and the second SSM sent by the current network element to the next-level network element via the cascade port may also be in the form of an Ethernet frame. Certainly, the present disclosure is not limited thereto. It should be understood that the PLA port refers to a logical port formed by aggregation of a plurality of air interfaces, and each air interface refers to a single wireless interface or a single wireless link. The SSMs are sent and/or received via corresponding air interfaces.

It should be noted that the SSM carries parameters for source selection, such as QL, NodeID, and NodeNum. In an existing technology, NodeNum carried in the SSM denotes the number of nodes passed by the SSM. In the present disclosure, NodeNum carried in the first SSM is no longer the number of nodes actually passed by the first SSM, while NodeNum carried in the second SSM is still the number of nodes actually passed by the second SSM.

When a peer network element receives a plurality of SSMs, the peer network element locks the SSM with the minimum NodeNum, and takes a clock source of the SSM with the minimum NodeNum as a clock source of the peer network element. Therefore, when the peer network element receives the first SSM and the second SSM at the same time, the peer network element locks the second SSM. However, the peer network element cannot receive the first SSM and the second SSM at the same time. The SSM received by the peer network element will be described below.

The clock synchronization method provided in the first aspect of the present disclosure may be performed by an upstream master network element (i.e., the network element configured with the PLA port) among N+1 network elements subjected to cross-box aggregation. It should be noted that the N+1 network elements are cascaded in sequence via the cascade ports in multi-network element cross-box aggregation, and the master network element is a first-level network element (i.e., the network element A1 in the drawings) among the cascaded multiple levels of network elements.

A plurality of network elements downstream of the current network element are also subjected to cross-box aggregation, and a master network element among the downstream network elements is the network element B1 which is also configured with a PLA port. Moreover, the network element B1 is also cascaded with a plurality of network elements.

As described above, the current network element (i.e., the network element A1) configured with the first PLA port sends two SSMs, and the GMID carried in the first SSM is the same as that carried in the second SSM, for example, both GMIDs is the identification of the current network element.

The current network element A1 sends the first SSM to the downstream master network element B1 via first PLA port, and meanwhile, the current network element A1 sends the second SSM to the next-level network element (i.e., a network element A2) via the cascade port. After receiving the second SSM, the next-level network element A2 regenerates an SSM based on the node number (i.e., N0+1) and the GMID carried in the second SSM, and sends the regenerated SSM to a next-level network element A3 of the network element A2 in the form of an Ethernet frame, and the network element A2 further sends the regenerated SSM to a downstream network element B2 of the network element A2 via an air interface of the network element A2 in the form of a private message. After receiving the SSM sent by the network element A2, the downstream network element B2 analyzes the SSM, and generates a new SSM based on an analysis result. It should be noted that NodeNum carried in the SSM generated by the network element B2 is greater than NodeNum carried in the SSM generated by the network element A2 by 1, that is, NodeNum carried in the SSM sent by the network element A2 is N0+2, and NodeNum carried in the SSM generated by the network element B2 is N0+3. The network element B2 sends the SSM generated by the network element B2 to the network element B1 via a cascade port with the network element B1. Therefore, NodeNum carried in the SSM received by the network element B1 from the network element B2 via the cascade port is N0+3.

As described above, NodeNum in the first SSM directly sent by the network element A1 to the network element B1 via the PLA port is not less than N0+4, and NodeNum in the SSM sent by the network element B2 to the network element B1 is N0+3. Based on a source selection scheme, the downstream network element B1 may preferentially select a clock source corresponding to a GMID carried by the SSM obtained via the cascade port as a clock source of the network element B1. Even if a link between the upstream network element A1 and the downstream network element B1 is disconnected, the clock source of the downstream network element B1 does not change, and a frequency of the downstream network element B1 maintains synchronized with that of the upstream network element, which can ensure that a protocol depending on frequency synchronization of the two network elements is correctly executed. That is, when a PTP message or a gPTP message is transmitted on a cross-network element PLA link, residence time of the PTP message or the gPTP message can still be correctly calculated if the link between the air interfaces of the master network elements is disconnected.

A specific value of N0 is not particularly limited in the present disclosure. In an alternative implementation, an external clock provides a clock for the current network element A1. In this case, N0=0. Accordingly, N11 ≧ 4 and N12=1. It should be understood that N0=0 in a case where an external clock source such as a meter which provides the clock for the current network element A1 is directly connected to the current network element A1; and the value of N0 may be 4 in a case where there are three nodes between the current network element A1 and the external clock source which provides the clock for the current network element A1.

In the present disclosure, a specific value of NodeNum carried by the first SSM is not particularly limited as long as NodeNum carried by the first SSM is not less than N0+4, so as to ensure that the downstream network element preferentially selects the clock obtained via the cascade port of the downstream network element when selecting the clock source (that is, selecting the clock source corresponding to the GMID carried by the SSM obtained via the cascade port of the network element as the clock source of the downstream network element).

It should be noted that, although the network element A2 may send the SSM generated by the network element A2 to the peer network element B2 in the form of a private message via the air interface, it should be understood that link disconnection may also occur between the network element A2 and the network element B2. In order to ensure that the network element B1 still preferentially selects the SSM received via the cascade port of the network element B1 in the presence of link disconnection between the network element A2 and the network element B2, optionally, the node number carried by the first SSM satisfies the following formula (3):

$$N11 = N0 + (N+1)*2 \qquad (3)$$

Accordingly, NodeNum of an SSM generated by a $(N+1)^{th}$ network element is N0+N. After the SSM generated by the $(N+1)^{th}$ network element is sent to a peer $(N+1)^{th}$ network element via an air interface in the form of a private message, the SSM is continuously transmitted between cascaded peer network elements, and NodeNum becomes N0+2N+1 when the SSM arrives at the network element B1. That is, NodeNum carried by the first SSM is greater than NodeNum of the SSM which is received by the network element B1 and generated by the $(N+1)^{th}$ network element at the side of the network element A1. Therefore, as long as not all the links between the air interfaces of the network elements are disconnected, the network element B1 may preferentially select the SSM received via the cascade port to determine the clock source.

As described above, N0=0 when the network element A1 receives the external clock source, and accordingly, NodeNum carried by the first SSM is (N+1)*2. That is, NodeNum carried by the first SSM is 4 when the number of the network elements subjected to cross-box aggregation is 2 (i.e., N=1), and NodeNum carried by the first SSM is 6 when the number of the network elements subjected to cross-box aggregation is 3 (i.e., N=2).

The clock synchronization method provided in the present disclosure will be further described below by taking N=2 as an example. In the present disclosure, all SSMs in the form of an Ethernet frame are referred to as SYNCEs.

Upstream network elements subjected to cross-box aggregation include a network element A1, a network element A2, and a network element A3 which are cascaded in sequence, and the network element A1 is a master network element, and is configured with a PLA port A (i.e., the first PLA port). The network element A1 is cascaded with a cascade port Cascade A21 of the network element A2 via a cascade port Cascade A11, and the network element A2 is cascaded with a cascade port Cascade A31 of the network element A3 via a cascade port Cascade A22. The network element A1 further includes an air interface A11 and an air interface A12, the network element A2 further includes an air interface A21, and the network element A3 further includes an air interface A31.

Downstream network elements subjected to cross-box aggregation include a network element B1, a network element B2, and a network element B3, and the network element B1 is a master network element, and is configured with a PLA port B (i.e., a second PLA port). The network element B1 is cascaded with a cascade port Cascade B21 of the network element B2 via a cascade port Cascade B11, and the network element B2 is cascaded with a cascade port Cascade B31 of the network element B3 via a cascade port Cascade B22. The network element B1 further includes an air interface B11 and an air interface B12, the network element B2 further includes an air interface B21, and the network element B3 further includes an air interface B31.

In the present disclosure, the air interface A11 of the network element A1 is in communication connection with the air interface B11 of the network element B1, and the air interface A12 of the network element A1 is in communication connection with the air interface B12 of the network element B1; the air interface A21 of the network element A2 is in communication connection with the air interface B21 of the network element B2; and the air interface A31 of the network element A3 is in communication connection with the air interface B31 of the network element B3.

The network element A1 sends the first SSM carrying NodeNum=6 via both the air interface A11 and the air interface A12.

The network element A1 sends the second SSM carrying NodeNum=1 to the network element A2 via the cascade port Cascade A11.

The network element A2 selects a clock source corresponding to the GMID carried by the SSM received via the cascade port Cascade A21 as a clock source of the network element A2, and sends an SSM carrying NodeNum=2 to the cascade port Cascade A22 and the air interface A21.

The network element A3 selects the clock source corresponding to the GMID carried by the SSM received via the cascade port Cascade A31 as a clock source of the network element A3, and sends an SSM carrying NodeNum=3 to the air interface A31.

When all the links between the air interfaces are normal and the network element A1 locks to the external clock source, a method for ensuring frequency synchronization of the network element A1 and the network element B1 is as follows:

transfer paths of the SYNCE in the network are A1-->A2-->B2-->B1, A2-->A3, and B2-->B3, and at this time, the clocks of all the network elements are synchronized to the network element A1. When the link between the network element A2 and the network element B2 is disconnected, the transfer path of the SYNCE is A1-->A2-->A3-->B3-->B2-->B1, and at this time, the clocks of all the network elements are synchronized to the network element A1. When the link between the network element A2 and the network element B2 and the link between the network element A3 and the network element B3 are both disconnected, the transfer path of the SYNCE is A1-->B1, and the clock of the network element B1 is still synchronized to the network element A1.

When the network element A1 is disconnected from the external clock source, since the network element A1 is configured as a node clock source, the network element A1 may provide a clock for the other network elements in the network, so that the network element A1 and the network element B1 still keep synchronized.

In order to prevent looping in multi-hop cross-network element PLA aggregation, each master network element (both the network element A1 and the network element B1 above are master network elements) needs to be configured as a node.

In an implementation of the present disclosure, the external clock source is used as the clock source of the most upstream master network element. When the external clock source fails, the downstream master network element is desired to be able to synchronize to the most upstream master network element. In view of this, clock priority NodePriority of the current network element may be carried in the first SSM and the second SSM. A clock source is selected based on NodePriority of each master network element when a source selection algorithm is adopted, and specifically, the master network element with the highest NodePriority is taken as the clock source.

The first SSM and the second SSM carry the same clock priority. In an alternative implementation, the current network element A1 is the most upstream network element, then the first SSM and the second SSM carry a value (e.g., 1) representing the highest priority, and each downstream master network element is synchronized to the current network element A1 in a case where the external clock source fails because NodePriority of the current network element A1 is the highest, which ensures frequency synchronization of each master network element.

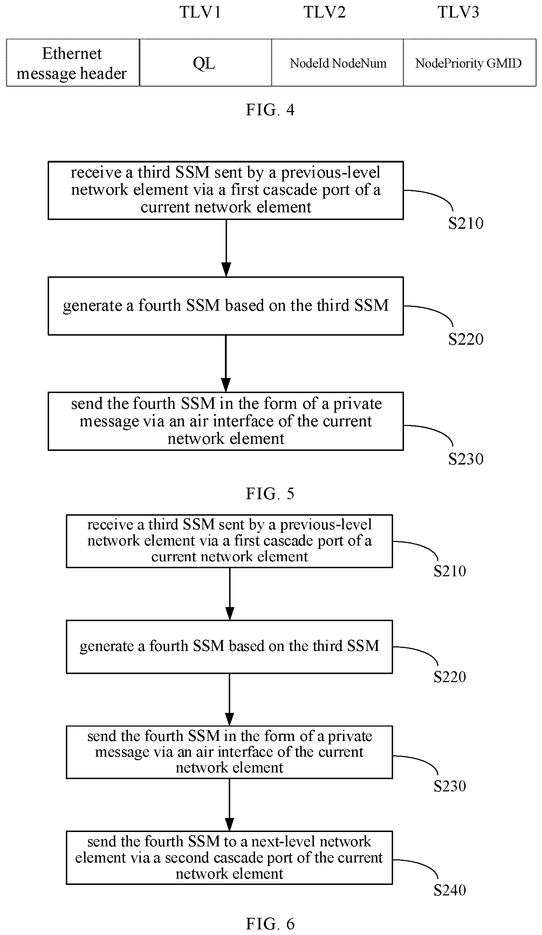

In the present disclosure, the parameters for source selection such as the QL, the GMID, the Node ID (NodeID), the node number (NodeNum), and NodePriority may be carried by extending an SSM protocol. FIG. 4 illustrates an implementation of an SSM.

As shown in FIG. 4, a network-element NodePriority field and a GMID field are added to the SSM. In an alternative implementation, the two fields are placed in TLV3 of the message. A GMID padding method for the SSM messages sent by each network element in the network is as follows: padding with a GMID carried in a message received via a locked clock source port; or, padding with an ID of the network element if no clock source is locked; or, padding with 0 if the network element is not a node. A NodePriority padding method is as follows: if the network element is a node, padding with the priority of the node which is configured by a user; and if the network element is not a node, padding with 0.

In a second aspect of the present disclosure, there is provided a clock synchronization method, and as shown in FIG. 5, the clock synchronization method includes:

operation S210, receiving a third SSM sent by a previous-level network element via a first cascade port of a current network element;

operation S220, generating a fourth SSM based on the third SSM, with a clock number carried by the fourth SSM being greater than a clock number carried by the third SSM by 1; and

operation S230, sending the fourth SSM in the form of a private message via an air interface of the current network element, with the current network element and N network elements subjected to cross-box aggregation, the N+1 network elements subjected to cross-box aggregation cascaded in sequence, the current network element being an M-level network element, M being a positive integer, and $2 \leq M \leq N+1$.

The clock synchronization method provided in the second aspect of the present disclosure is performed by a slave network element among a plurality of network elements subjected to cross-box aggregation.

In the present disclosure, the "first cascade port" refers to a cascade port of the current network element which is cascaded with the previous-level network element. The SSM (i.e., the third SSM) received by the current network element via the first cascade port is sent by the previous-level network element, and the current network element adds 1 to NodeNum in the received SSM to obtain the SSM (i.e., the fourth SSM) of the current network element. Since the air interface of the current network element is aggregated to a PLA port of a master network element, the air interface of the current network element cannot be used for sending information to a downstream network element in the form of an Ethernet frame. In order to enable the downstream network element to receive the SSM from the current network element, the SSM of the current network element is sent to a peer network element in the form of a private message via the air interface of the current network element at operation S230. The "third SSM" may be in the form of an Ethernet frame.

After receiving the fourth SSM sent by the current network element, the peer network element may continue to transmit the SSM in a direction towards a master network element of the peer network element.

It should be noted that the clock synchronization method provided in the second aspect of the present disclosure is used in cooperation with the clock synchronization method provided in the first aspect of the present disclosure. When the network element performing the clock synchronization method provided in the second aspect of the present disclosure is a second-level network element among the cascaded N+1 network elements, the third SSM received at operation S210 is actually the second SSM at operation S120.

In a case where the current network element is not a last-level network element, as shown in FIG. 6, the clock synchronization method further includes: operation S240, sending the fourth SSM to a next-level network element via a second cascade port of the current network element.

That is, if the current network element is not the last-level network element, the fourth SSM generated by the current network element needs to be sent to the next-level network element of the current network element.

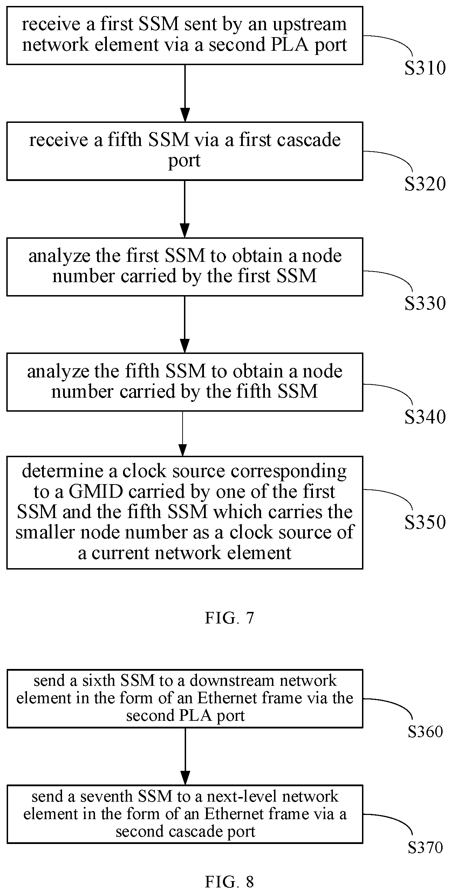

In a third aspect of the present disclosure, there is provided a clock synchronization method, and as shown in FIG. 7, the clock synchronization method includes:

operation S310, receiving a first SSM sent by an upstream network element via a second PLA port;

operation S320, receiving a fifth SSM via a first cascade port;

operation S330, analyzing the first SSM to obtain a node number carried by the first SSM;

operation S340, analyzing the fifth SSM to obtain a node number carried by the fifth SSM; and

operation S350, determining a clock source corresponding to a GMID carried by one of the first SSM and the fifth SSM which carries the smaller node number as a clock source of a current network element.

The clock synchronization method described in the third aspect of the present disclosure is performed by a downstream master network element. That is, the current network element performing the clock synchronization method provided in the third aspect and N network elements are subjected to cross-box aggregation, the N+1 network elements subjected to cross-box aggregation are cascaded in sequence, the current network element is a first-level network element, and N is a positive integer.

The first SSM at operation S310 is the first SSM sent by the upstream network element with the clock synchronization method provided in the first aspect of the present disclosure. As described above, with the node number carried in the first SSM being equal to the initial node number N0 plus a positive integer not less than 4, it can be ensured that the current network element selects a network element cascaded with the current network element (i.e., the next-level network element of the current network element) as a clock source when the current network element selects the clock source, and a frequency of the current network element is the same as that of the upstream network element when a link between the current network element and the upstream network element is disconnected.

As described above, the first SSM is in the form of an Ethernet frame.

The fifth SSM is information received via the cascade port, so that the fifth SSM is also in the form of an Ethernet frame.

In a case where a plurality of network elements downstream of the current network element are subjected to cross-box aggregation, as shown in FIG. 8, the clock synchronization method may further include:

> operation S360, sending a sixth SSM to a downstream network element via the second PLA port; and
> operation S370, sending a seventh SSM to a next-level network element via a second cascade port.

A node number carried by the sixth SSM satisfies the following relational expression (4), a node number carried by the seventh SSM satisfies the following formula (5), that is, the node number carried by the seventh SSM is equal to the sum of the node number carried by the first SSM and 1, GMIDs carried by the sixth SSM and the seventh SSM are a clock identification of the determined clock source, and the current network element is the first-level network element;

$$N6 \geq N1+4 \qquad (4);$$

$$N7 = N1+1 \qquad (5);$$

> where N6 denotes the node number carried by the sixth SSM;
> N7 denotes the node number carried by the seventh SSM; and
> N1 denotes the node number carried by the first SSM.

It should be noted that the "second cascade port" and the "first cascade port" at operation S320 are not the same cascade port.

Optionally, NodeNum carried by the sixth SSM satisfies the following formula (6):

$$N6 = N1 + (N+1)*2 \qquad (6)$$

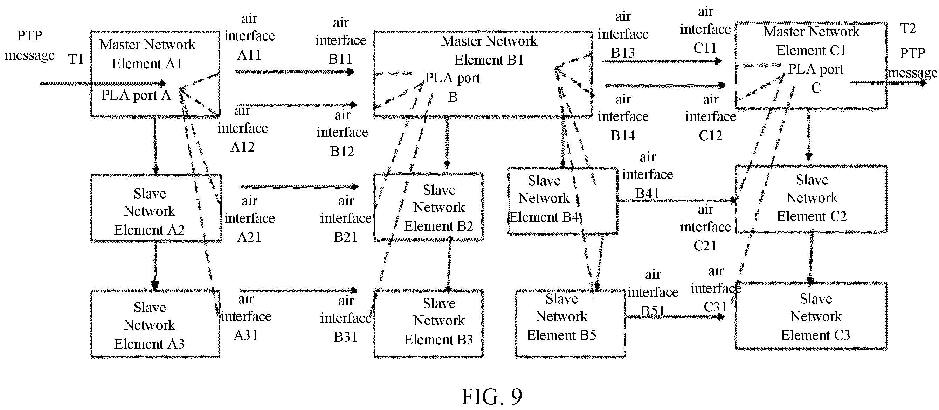

FIG. 9 illustrates a case where a plurality of network elements downstream of the current network element are also subjected to cross-box aggregation. In FIG. 9, a plurality of network elements that are subjected to cross-box aggregation and upstream of a master network element B1, a slave network element B2, a slave network element B3, a slave network element B4, and a slave network element B5 which are subjected to cross-box aggregation are a master network element A1, a slave network element A2, and a slave network element A3, and a plurality of network elements that are subjected to cross-box aggregation and downstream of the master network element B1, the slave network element B2, the slave network element B3, the slave network element B4, and the slave network element B5 which are subjected to cross-box aggregation are a master network element C1, a slave network element C2, and a slave network element C3. The master network element B1, the slave network element B2, and the slave network element B3 are cascaded, and the master network element B1, the slave network element B4, and the slave network element B5 are cascaded. A private message may be transmitted between an air interface B41 of the slave network element B4 and an air interface C21 of the slave network element C2, and a private message may be transmitted between an air interface B51 of the slave network element B5 and an air interface C31 of the slave network element C3.

The master network element C1 receives the sixth SSM via an air interface C11 and an air interface C12. The network element B4 receives the seventh SSM.

Optionally, each of the sixth SSM and the seventh SSM may be in the form of an Ethernet frame.

In order to prevent looping, optionally, each of the first SSM and the sixth SSM carries priority information, and priority carried by the sixth SSM is lower than that carried by the first SSM.

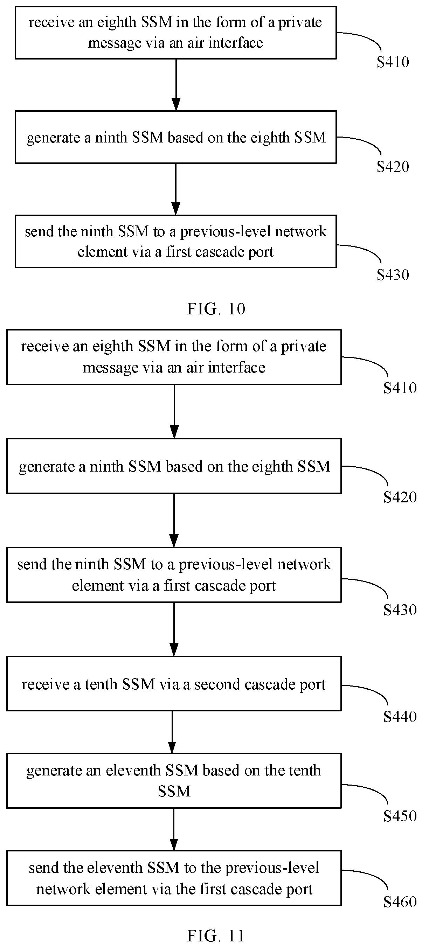

In a fourth aspect of the present disclosure, there is provided a clock synchronization method, and as shown in FIG. 10, the clock synchronization method includes:

> operation S410, receiving an eighth SSM in the form of a private message via an air interface;
> operation S420, generating a ninth SSM based on the eighth SSM, with a node number carried by the ninth SSM being equal to a node number carried by the eighth SSM plus 1; and
> operation S430, sending the ninth SSM to a previous-level network element via a first cascade port.

A current network element and N network elements are subjected to cross-box aggregation, the N+1 network elements subjected to cross-box aggregation are cascaded in sequence, and the current network element is not a first-level network element.

The clock synchronization method provided in the fourth aspect of the present disclosure is performed by a downstream slave network element. That is, the current network element receives the eighth SSM in the form of a private message via the air interface, and may generate the ninth SSM based on the eighth SSM. After receiving the ninth SSM, the previous-level network element of the current network element may determine a clock source.

Alternatively, the ninth SSM may be in the form of an Ethernet frame.

In order to avoid a failure to normally transmit the SSM in a case where a link between air interfaces of the current network element and an upstream network element is disconnected, optionally, in a case where the current network element is not a last-level network element, as shown in FIG. 11, the clock synchronization method further includes: operation S440, receiving a tenth SSM via a second cascade port.

It should be noted that the current network element receives the tenth SSM and the eighth SSM in a case where the link between the air interfaces of the current network element and the upstream network element is normal, and NodeNum carried in the eighth SSM is smaller than NodeNum carried in the tenth SSM, so that the current network element still selects the eighth SSM. Alternatively, the tenth SSM may be in the form of an Ethernet frame.

In a case where the current network element cannot receive the eighth SSM, as shown in FIG. 11, the clock synchronization method may further include:

operation S450, generating an eleventh SSM based on the tenth SSM, with a node number carried by the eleventh SSM being greater than a node number carried by the tenth SSM by 1; and

operation S460, sending the eleventh SSM to the previous-level network element via the first cascade port.

It can be ensured by operation S440 and operation S450 that the previous-level network element of the current network element receives the SSM.

Optionally, the eleventh SSM is in the form of an Ethernet frame.

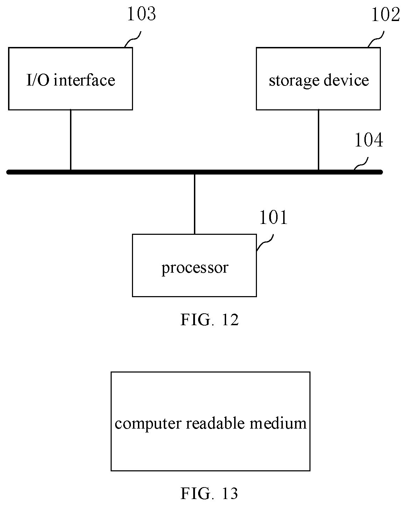

In a fifth aspect of the present disclosure, there is provided an electronic device, and as shown in FIG. 12, the electronic device includes:

one or more processors 101; and

a storage device 102 having stored thereon one or more programs which, when executed by the one or more processors, cause the one or more processors 101 to implement the above clock synchronization methods provided in the present disclosure.

Optionally, the electronic device may further include one or more input/output (I/O) interfaces 103 connected between the one or more processors and the storage device and configured to enable information interaction between the one or more processors and the storage device.

The processor 101 is a device having a data processing capability, and includes, but is not limited to, a Central Processing Unit (CPU); the storage device 102 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 103 is connected between the processor 101 and the storage device 102, is capable of enabling the information interaction between the processor 101 and the storage device 102, and includes, but is not limited to, a data bus (Bus).

In some embodiments, the processor 101, the storage device 102, and the I/O interface 103 are connected to each other through a bus 104, and then are connected to other components of a computing device.

In a sixth aspect of the present disclosure, as shown in FIG. 13, there is provided a computer readable medium having stored thereon a computer program which, when executed by a processor, implements any of the above clock synchronization methods provided in the present disclosure.

In a seventh aspect of the present disclosure, there is provided a network element, including a configuration module, an air-interface time synchronization module, a timestamp module, an SSM construction module, an air-interface SSM sending and receiving module, a cascade-port SSM sending and receiving module, an SSM analysis module, and a clock source selection algorithm module.

The configuration module is configured to process clock source port parameters configured by a user, a Node parameter of a network element (for example, whether the network element is a node), NodeID, NodePriority and the like.

The air-interface time synchronization module is configured to perform a time synchronization function with a Modem.

The timestamp module is configured to provide a timestamp for a **PTP** message or a gPTP message and correct a CF domain.

The SSM construction module is configured to construct each TLV of SSMs sent via each interface based on a source selection result of a clock source and user configuration.

The air-interface SSM sending and receiving module is configured to send and receive SSMs in the form of an adjacent-hop private message via air interfaces.

The cascade-port SSM sending and receiving module is configured to send and receive SSMs in the form of a common Ethernet frame via cascade ports.

The SSM analysis module is configured to analyze contents of each TLV of SSMs, and respectively store data obtained by analysis of the messages received via different ports.

The clock source selection algorithm module is configured to perform clock source selection based on the SSM data of each port stored by the SSM analysis module.

Exemplary Embodiment

In the cross-network element PLA aggregation scenario illustrated by FIG. 9, the configuration module of each network element is responsible for receiving clock source configuration of each network element configured by the user and node parameters and storing the parameters. The network element A1, the network element B1, and the network element C1 are all configured as node network elements, and NodePriority of the network element A1, NodePriority of the network element B1, and NodePriority of the network element C1 are 1, 2, and 3, respectively. The smaller the value, the higher the priority. NodeID of the network element A1, NodeID of the network element B1, and NodeID of the network element C1 are 1, 2, and 3, respectively, the network element A1 is connected to an external reference source BITS, and QL=2.

A sending rule for sending SSMs on each network element is as follows: for different sending ports of the master network element, the SMMs sent from the master network element are different in NodeNum and in sending channel. If the master network element is cascaded with merely one network element in cross-box aggregation, NodeNum sent by a main box via the PLA port is equal to NodeNum received upstream plus 4; if the master network element is cascaded with two slave network elements, as shown in FIG. 2, NodeNum is equal to NodeNum received upstream plus 6; and if the master network element is cascaded with N slave network elements, NodeNum is equal to NodeNum received upstream plus (N+1)*2.

Operation 3: the network element A1 receives QL=2, and since the BITS clock does not carry NodeID or NodeNum, in the topology shown in FIG. 2, QL=2, NodeID=1, NodeNum=6, NodePriority=1, and GMID=1 are in TLV1, TLV2, and TLV3 carried in the message sent via the air interfaces A11 and A12; and QL=2, NodeID=1, NodeNum=1, NodePriority=1, and GMID=1 are in the message sent via the cascade port.

The network element A2 locks to the network element A1, and the sent SSM carries QL=2, NodeID=1, NodeNum=2, NodePriority=1, and GMID=1.

The network element A3 locks to the network element A2, and the sent SSM carries QL=2, NodeID=1, NodeNum=3, NodePriority=1, and GMID=1.

The network element B2 locks to the network element A2, and the network element B3 locks to the network element A3 or the network element B2.

The processing at the side of the network element B1 is the same as that at the side of the network element A1, and QL=2, NodeID=2, NodeNum=12, NodePriority=2, and GMID=1 are sent in an air interface direction facing C.

In this way, a frequency of the master network element B1 and a frequency of the master network element C1 are both synchronized to the master network element A1 through the respective slave network elements.

When the links of the air interfaces between the master network element A1 and the master network element B1 are disconnected, frequency sources of the master network element B1 and the master network element C1 are not switched, and frequency synchronization performance can be ensured. Merely when all the links between the air interfaces of the slave network elements are disconnected, the master network element B1 and the master network element C1 perform frequency synchronization to the master network element A1 via the directly connected air interfaces. At this time, the frequency sources are still the same.

A time synchronization method for Modems of the master network element A1 and the master network element B1 is as follows:

1) automatically negotiating to obtain a Modem master-slave relationship for time synchronization;
2) the master modem transmits a frame header at a time T1, and after a delay D, the slave modem receives the frame header from the master modem at a time T2;
3) the slave modem transmits the frame header at a time T3, and after a delay D, the master modem receives the frame header from the slave modem at a time T4;
4) the master modem starts counting from the time T1 (the time when the master modem transmits the frame header), and stops counting at the time T4 (the time when the frame header from the slave modem is received), and a count value is cnt1;

5) the slave modem starts counting from the time T2 (the time when the frame header from the master modem is received), and stops counting at the time T3 (the time when the slave modem transmits the frame header), a count value is cnt2, cnt2 corresponds to an internal processing delay of the slave modem, cnt1 corresponds to 2D+cnt2, and cnt1 and cnt2 are reported to software;

a calculation formula for the delay D is as follows:

$$T4 - T1 = cnt1$$

$$T3 - T2 = cnt2$$

D=(cnt1-cnt2)/2 may be obtained, cnt1 and cnt2 need to be counted at a same frequency, that is, it is assumed that the frequencies of the master network elements are synchronized at this time, which is ensured by a synchronization result at the operation 3.

The PTP message enters the cross-network element aggregation PLA network from the master network element A1, and the timestamp module performs correction of a residence time from the master network element A1 to the master network element C1 on the PTP message. Since the master network element A1 and the master network element C1 achieve frequency synchronization and time synchronization, accuracy of the correction of the residence time is ensured.

In the presence of link disconnection between the slave network elements or between the master network elements, the PTP message reaches a far end via the air interfaces of the slave network elements in the PLA link, and at this time, the correction of the residence time is also normal.

In a case where the external reference source of the master network element A1 is lost, each network element may select the node with the highest NodePriority as a common reference source using a frequency selection algorithm. In this embodiment, the master network element A1 is selected as the common source, and at this time, the correction for the PTP message may also be ensured.

In the clock synchronization method provided in the present disclosure, the network element configured with the first PLA port sends two forms of SSMs, which are the first SSM and the second SSM, respectively. The clock sources in the first SSM and the second SSM are the same, so that the GMIDs in the first SSM and the second SSM are the same (for example, both the GMIDs are the ID of the current network elements).

In the clock synchronization method provided in the present disclosure, the upstream master network element sends the first SSM to the downstream master network element via the first PLA port, and meanwhile, the upstream master network element further sends the second SSM to the next-level network element of the upstream master network element via the cascade port. After receiving the second SSM, the next-level network element of the upstream master network element regenerates the SSM based on the node number and the GMID carried in the second SSM, and sends the regenerated SSM to a next-level network element of the next-level network element, and further sends the regenerated SSM to the downstream network element of the next-level network element via the air interface of the next-level network element in the form of a private message. After receiving the SSM sent by the next-level network element cascaded with the master network element, the downstream network element analyzes the SSM, and generates the new SSM based on the analysis result. It should be noted that NodeNum carried in the SSM generated by the next-level network element of the downstream master network element is greater than NodeNum carried in the SSM generated by the next-level network element of the upstream master network element by 1, that is, NodeNum carried in the SSM generated by the next-level network element of the upstream master network element is N0+2, and NodeNum carried in the SSM generated by the next-level network element of the downstream master network element is N0+3. The next-level network element of the downstream master network element sends the SSM generated by the next-level network element of the downstream master network element to the downstream master network element via the cascade port cascaded with the downstream master network element. Therefore, NodeNum carried in the SSM which is received by the downstream master network element and sent by the network element B2 via the cascade port is N0+3.

As described above, NodeNum in the first SSM directly sent by the upstream network element to the downstream master network element via the PLA port is not less than N0+4, and NodeNum in the SSM sent by the next-level network element of the downstream master network element to the downstream master network element is N0+3. Therefore, based on the source selection scheme, the downstream network element master may preferentially select the clock source corresponding to the GMID carried by the SSM obtained via the cascade port as the clock source. Even if the link between the upstream master network element and the downstream master network element is disconnected, the clock source of the downstream master network element does not change, and the frequency of the downstream master network element maintains synchronized with that of the upstream network element, which can ensure that a protocol depending on frequency synchronization of the two network elements is correctly executed. That is, when the PTP message or the gPTP message is transmitted on the cross-network element PLA link, the residence time of the PTP message or the gPTP message can still be correctly calculated if the link between the air interfaces of the master network elements is disconnected.

It should be understood by those of ordinary skill in the art that the functional modules/units in all or some of the operations, the systems, and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

## Claims

1.  A clock synchronization method, comprising:

    sending a first synchronization status message to a downstream network element via a first physical link aggregation port; and
    sending a second synchronization status message to a next-level network element via a cascade port; wherein, a node number carried by the first synchronization status message satisfies the following relational expression (1), a node number carried by the second synchronization status message satisfies the following formula (2), grandmaster IDs carried by the first synchronization status message and the second synchronization status message are an identification of a current network element, the current network element and N network elements are subjected to cross-box aggregation, the N+1 network elements subjected to cross-box aggregation are cascaded in sequence, the current network element is a first-level network element, and N is a positive integer:

    $$N11 \geq N0 + 4 \qquad (1)$$

    $$N12 = N0 + 1 \qquad (2)$$

    wherein N11 denotes the node number carried by the first synchronization status message;
    N12 denotes the node number carried by the second synchronization status message; and
    N0 denotes an initial node number.

2.  The clock synchronization method of claim 1, wherein the node number carried by the first synchronization status message satisfies the following formula (3):

$$N11 = N0 + (N+1)*2 \qquad (3).$$

3. The clock synchronization method of claim 1 or 2, wherein the first synchronization status message and the second synchronization status message further carry same clock priority.

4. The method of claim 3, wherein the first synchronization status message and the second synchronization status message carry a value representing the highest priority.

5. A clock synchronization method, comprising:

   receiving a third synchronization status message sent by a previous-level network element via a first cascade port of a current network element;
   generating a fourth synchronization status message based on the third synchronization status message, wherein a clock number carried by the fourth synchronization status message is greater than a clock number carried by the third synchronization status message by 1; and
   sending the fourth synchronization status message in a form of a private message via an air interface of the current network element, wherein the current network element and N network elements are subjected to cross-box aggregation, the N+1 network elements subjected to cross-box aggregation are cascaded in sequence, the current network element is an M-level network element, M is a positive integer, and 2≤M≤N+1.

6. The clock synchronization method of claim 5, wherein in a case where the current network element is not a last-level network element, the clock synchronization method further comprises:
   sending the fourth synchronization status message to a next-level network element via a second cascade port of the current network element.

7. A clock synchronization method, comprising:

   receiving a first synchronization status message sent by an upstream network element via a second physical link aggregation port;
   receiving a fifth synchronization status message via a first cascade port;
   analyzing the first synchronization status message to obtain a node number carried by the first synchronization status message;
   analyzing the fifth synchronization status message to obtain a node number carried by the fifth synchronization status message; and
   determining a clock source corresponding to a grandmaster **ID** carried by one of the first synchronization status message and the fifth synchronization status message which carries the smaller node number as a clock source of a current network element, wherein,
   the current network element and N network elements are subjected to cross-box aggregation, the N+1 network elements subjected to cross-box aggregation are cascaded in sequence, the current network element is a first-level network element, and N is a positive integer.

8. The clock synchronization method of claim 7, further comprising:

   sending a sixth synchronization status message to a downstream network element via a third physical link aggregation port; and
   sending a seventh synchronization status message to a next-level network element via a second cascade port; wherein,
   a node number carried by the sixth synchronization status message satisfies the following relational expression (4), a node number carried by the seventh synchronization status message satisfies the following formula (5) and is equal to a sum of a node number carried by the first synchronization status message and 1, grandmaster IDs carried by the sixth synchronization status message and the seventh synchronization status message are a clock identification of the determined clock source, and the current network element is the first-level network element; wherein

$$N6 \geq N1+4 \qquad (4);$$

$$N7 = N1 + 1 \qquad (5);$$

N6 denotes the node number carried by the sixth synchronization status message;
N7 denotes the node number carried by the seventh synchronization status message; and
N1 denotes the node number carried by the first synchronization status message.

9. The clock synchronization method of claim 8, wherein the node number carried by the sixth synchronization status message satisfies the following formula (6):

$$N6 = N1 + (N+1)*2 \qquad (6).$$

10. The clock synchronization method of claim 8, wherein each of the first synchronization status message and the sixth synchronization status message carries priority information, and priority carried by the sixth synchronization status message is lower than priority carried by the first synchronization status message.

11. A clock synchronization method, comprising:

    receiving an eighth synchronization status message in a form of a private message via an air interface;
    generating a ninth synchronization status message based on the eighth synchronization status message, wherein a node number carried by the ninth synchronization status message is equal to a node number carried by the eighth synchronization status message plus 1; and
    sending the ninth synchronization status message to a previous-level network element via a first cascade port, wherein,
    a current network element and N network elements are subjected to cross-box aggregation, the N+1 network elements subjected to cross-box aggregation are cascaded in sequence, and the current network element is not a first-level network element.

12. The clock synchronization method of claim 11, wherein in a case where the current network element is not a last-level network element, the clock synchronization method further comprises:

    receiving a tenth synchronization status message in a form of an Ethernet frame via a second cascade port; and
    in a case wherein a link between an air interface of the current network element and an air interface of an upstream network element is disconnected, the clock synchronization method further comprises:

        generating an eleventh synchronization status message based on the tenth synchronization status message, with a node number carried by the eleventh synchronization status message being greater than a node number carried by the tenth synchronization status message by 1; and
        sending the eleventh synchronization status message to the previous-level network element via the first cascade port.

13. An electronic device, comprising:

    one or more processors; and
    a storage device having stored thereon one or more programs which, when executed by the one or more processors, cause the one or more processors to implement the clock synchronization method of any one of claims 1 to 12.

14. A computer readable medium having stored thereon a computer program which, when executed by a processor, implements the clock synchronization method of any one of claims 1 to 12.

FIG. 1

FIG. 2

FIG. 3

| | TLV1 | | TLV2 | | TLV3 |
|---|---|---|---|---|---|
| Ethernet message header | QL | | NodeId NodeNum | | NodePriority GMID |

FIG. 4

```
┌─────────────────────────────────────┐
│ receive a third SSM sent by a        │
│ previous-level network element via   │── S210
│ a first cascade port of a current    │
│ network element                      │
└─────────────────────────────────────┘
                  │
                  ▼
┌─────────────────────────────────────┐
│ generate a fourth SSM based on the   │── S220
│ third SSM                            │
└─────────────────────────────────────┘
                  │
                  ▼
┌─────────────────────────────────────┐
│ send the fourth SSM in the form of a │
│ private message via an air interface │── S230
│ of the current network element       │
└─────────────────────────────────────┘
```

FIG. 5

```
┌─────────────────────────────────────┐
│ receive a third SSM sent by a        │
│ previous-level network element via   │── S210
│ a first cascade port of a current    │
│ network element                      │
└─────────────────────────────────────┘
                  │
                  ▼
┌─────────────────────────────────────┐
│ generate a fourth SSM based on the   │── S220
│ third SSM                            │
└─────────────────────────────────────┘
                  │
                  ▼
┌─────────────────────────────────────┐
│ send the fourth SSM in the form of a │
│ private message via an air interface │── S230
│ of the current network element       │
└─────────────────────────────────────┘
                  │
                  ▼
┌─────────────────────────────────────┐
│ send the fourth SSM to a next-level  │
│ network element via a second cascade │── S240
│ port of the current network element  │
└─────────────────────────────────────┘
```

FIG. 6

```
┌─────────────────────────────────────┐
│ receive a first SSM sent by an       │
│ upstream network element via a       │── S310
│ second PLA port                      │
└─────────────────────────────────────┘
                   │
                   ▼
┌─────────────────────────────────────┐
│ receive a fifth SSM via a first      │
│ cascade port                         │── S320
└─────────────────────────────────────┘
                   │
                   ▼
┌─────────────────────────────────────┐
│ analyze the first SSM to obtain a    │
│ node number carried by the first SSM │── S330
└─────────────────────────────────────┘
                   │
                   ▼
┌─────────────────────────────────────┐
│ analyze the fifth SSM to obtain a    │
│ node number carried by the fifth SSM │── S340
└─────────────────────────────────────┘
                   │
                   ▼
┌─────────────────────────────────────┐
│ determine a clock source             │
│ corresponding to a GMID carried by   │
│ one of the first SSM and the fifth   │── S350
│ SSM which carries the smaller node   │
│ number as a clock source of a        │
│ current network element              │
└─────────────────────────────────────┘
```

FIG. 7

```
┌─────────────────────────────────────┐
│ send a sixth SSM to a downstream     │
│ network element in the form of an    │── S360
│ Ethernet frame via the second PLA    │
│ port                                 │
└─────────────────────────────────────┘
                   │
                   ▼
┌─────────────────────────────────────┐
│ send a seventh SSM to a next-level   │
│ network element in the form of an    │── S370
│ Ethernet frame via a second cascade  │
│ port                                 │
└─────────────────────────────────────┘
```

FIG. 8

FIG. 9

EP 4 629 534 A1

receive an eighth SSM in the form of a private message via an air interface — S410

↓

generate a ninth SSM based on the eighth SSM — S420

↓

send the ninth SSM to a previous-level network element via a first cascade port — S430

FIG. 10

receive an eighth SSM in the form of a private message via an air interface — S410

↓

generate a ninth SSM based on the eighth SSM — S420

↓

send the ninth SSM to a previous-level network element via a first cascade port — S430

↓

receive a tenth SSM via a second cascade port — S440

↓

generate an eleventh SSM based on the tenth SSM — S450

↓

send the eleventh SSM to the previous-level network element via the first cascade port — S460

FIG. 11

103

102

| I/O interface | | storage device |

104

| processor |

101

FIG. 12

| computer readable medium |

FIG. 13

## INTERNATIONAL SEARCH REPORT

| International application No. |
| --- |
| **PCT/CN2024/070030** |

**A. CLASSIFICATION OF SUBJECT MATTER**

H04J3/06(2006.01)i

According to International Patent Classification (IPC) or to both national classification and IPC

**B. FIELDS SEARCHED**

Minimum documentation searched (classification system followed by classification symbols)

IPC: H04J

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI: 物理链路聚合, 同步状态消息, 时钟源标识, 网元, 节点, 级联, PLA, physical link aggregation, SSM, Synchronous Status Message, GMID, Grandmaster ID, NE, network element, node, cascade

**C. DOCUMENTS CONSIDERED TO BE RELEVANT**

| Category* | Citation of document, with indication, where appropriate, of the relevant passages | Relevant to claim No. |
| --- | --- | --- |
| A | CN 102404102 A (ZTE CORP.) 04 April 2012 (2012-04-04) description, paragraphs [0036]-[0068], and figures 1-5 | 1-14 |
| A | CN 108988973 A (ZTE CORP.) 11 December 2018 (2018-12-11) entire document | 1-14 |
| A | CN 110832805 A (HUAWEI TECHNOLOGIES CO., LTD.) 21 February 2020 (2020-02-21) entire document | 1-14 |
| A | CN 102368696 A (HANGZHOU H3C TECHNOLOGIES CO., LTD.) 07 March 2012 (2012-03-07) entire document | 1-14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 March 2024** | **04 April 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/070030**

| Patent document cited in search report | | | Publication date (day/month/year) | Patent family member(s) | | | Publication date (day/month/year) |
|---|---|---|---|---|---|---|---|
| CN | 102404102 | A | 04 April 2012 | None | | | |
| CN | 108988973 | A | 11 December 2018 | None | | | |
| CN | 110832805 | A | 21 February 2020 | None | | | |
| CN | 102368696 | A | 07 March 2012 | CN | 102368696 | B | 30 July 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310006466